# EUROPÄISCHE PATENTANMELDUNG

(11) **EP 2 378 182 A1**
(43) Veröffentlichungstag der Anmeldung: **19.10.2011**
(21) Anmeldenummer: 10160224.1
(22) Anmeldetag: 16.04.2010
(51) Int. Cl.: F16M 11/10, F16M 13/02

(54) **Halterung für eine Anzeigevorrichtung**

(71) Anmelder: Maurer + Partner AG, 3615 Heimenschwand (CH)
(72) Erfinder: Maurer, Ernst, 3615 Heimenschwand (CH)
(74) Vertreter: AMMANN PATENTANWÄLTE AG BERN

(57) **Zusammenfassung**

Halterung für eine Anzeigevorrichtung (1), beispielsweise einen Bildschirm. An einem Basiselement (5) ist ein winkelförmiges Tragelement (3) angeordnet und an der Anzeigevorrichtung (1) ein Z-förmiges Stützelement (4). Durch den Eingriff des Tragelements (3) im Stützelement (4) wird eine Schwenkachse für die Anzeigevorrichtung (1) gebildet. Die Neigung der Anzeigevorrichtung ist durch einen Verstellwinkel (9) und eine Spindel (11) einstellbar.

## Beschreibung

Die Erfindung betrifft eine Halterung für eine Anzeigevorrichtung, mit mindestens einem Basiselement und mindestens einem daran befestigten Tragelement sowie mit mindestens einem an der Anzeigevorrichtung zu befestigenden Stützelement, wobei das Tragelement und das Stützelement gegeneinander um eine mindestens annähernd horizontal orientierte Schwenkachse schwenkbar sind.

Solche Halterungen sind beispielsweise aus dem Dokument DE 20 2009 000 982 U1 0bekannt. Ein an einem Basiselement, beispielsweise einer Wand, befestigtes Tragelement und ein mit einem Bildschirm verbundenes Stützelement sind durch eine zylindrische Achse miteinander verbunden. Die Achse ist dabei in Bohrungen des Tragelements und des Stützelements aufgenommen. Die Montage des Bildschirms ist bei solchen Halterungen schwierig, insbesondere wenn es sich um einen grossen Bildschirm handelt, der nicht durch eine einzige Person getragen werden kann.

Ausgehend von diesem Stand der Technik liegt der Erfindung die Aufgabe zu Grunde, eine Halterung vorzuschlagen, welche einfach aufgebaut und kostengünstig herstellbar ist und mit welcher die Montage einer Anzeigevorrichtung sehr einfach durchführbar ist.

Diese Aufgabe wird erfindungsgemäss dadurch gelöst, dass das Tragelement und das Stützelement als hakenartig zusammenwirkende Profile ausgebildet sind, derart, dass eine Berührungslinie zwischen dem Tragelement und dem Stützelement die Schwenkachse bildet.

Diese Lösung hat insbesondere den Vorteil, dass durch die hakenartig zusammenwirkenden Profile die vorgängig mit dem Stützprofil ausgestattete Anzeigevorrichtung einfach in das zuvor am Basiselement angebrachte Tragelement eingehängt werden kann. Da eine Berührungslinie zwischen dem Tragelement und dem Stützelement die Schwenkachse bildet, erübrigen sich sowohl entsprechende Bohrungen im Tragelement und im Stützelement als auch der Einsatz einer physischen, zylindrischen Schwenkachse.

Nach einer Ausführungsart ist das Tragelement ein Winkelprofil mit zwei Schenkeln. Bevorzugt beträgt dabei der Winkel zwischen den Schenkeln weniger als 90 Grad. Ein solches Tragelement ist einfach und eignet sich gut als hakenartiges Element zum Einhängen des Stützelements.

Gemäss einer weiteren Ausführungsart ist das Stützelement ein Z-Profil. Ein solches Profil hat einen freien Schenkel, der in das zuvor genannte Tragelement eingreift.

Entsprechend einer anderen Ausführungsart ist das Stützelement ein nach unten offenes U-Profil. Auch ein solches Profil hat einen freien Schenkel, der in das zuvor genannte Tragelement eingreift.

Eine weitere Ausführungsart sieht vor, dass vom Stützelement vertikal beabstandet mindestens ein die Schwenklage definierender Verstellwinkel angeordnet ist. Dieser hält die Anzeigevorrichtung in einer gewählten Neigungslage stabil.

Wenn nach einer zusätzlichen Ausführungsart der Verstellwinkel ein mit einer Spindel zusammenwirkendes Innengewinde aufweist, ist die Neigungslage der Anzeigevorrichtung fein einstellbar.

Gemäss einer anderen Ausführungsart übergreift der Verstellwinkel das Basiselement mindestens teilweise horizontal. Der Verstellwinkel kann sich dadurch an einer von der Halterung abgewandten Fläche des Basiselements abstützen. Je nach Ausgestaltung des Basiselements kann dieses Übergreifen durch eine im Basiselement angeordnete Öffnung erfolgen.

Nach einer weiteren Ausführungsart ist am unteren Rand der Öffnung eine gegen das freie Ende des Verstellwinkels gerichtete Lasche angeordnet. Diese Lasche hat die Funktion einer Sicherung gegen unbeabsichtigtes Kippen der Anzeigevorrichtung, weil der Verstellwinkel nicht ohne Anheben der Anzeigevorrichtung die Öffnung verlassen kann.

Eine andere Ausführungsart sieht vor, dass das Stützelement mit mindestens zwei im Wesentlichen vertikal angeordneten, mit der Anzeigevorrichtung zu verbindenden Verbindungsprofilen verbunden ist. Dies erlaubt die Positionierung des Stützelements hinsichtlich der Anzeigevorrichtung unabhängig von in der Anzeigevorrichtung vorgesehenen Befestigungsmitteln.

Schliesslich ist nach einer zusätzlichen Ausführungsart vorgesehen, dass die Verbindungsprofile als C-Profile ausgebildet sind. Dies erlaubt eine besonders einfache Verbindung zwischen dem Stützprofils und den Verbindungsprofilen.

Ein Ausführungsbeispiel der Erfindung wird nachstehend unter Bezugnahme auf die angefügten Zeichnungen beispielsweise näher beschrieben. Es zeigt
- Figur 1: einen entlang der Linie I - I in Figur 2 geschnittenen Aufriss und
- Figur 2: einen in Richtung des Pfeils II in Figur 1 betrachteten Grundriss.

In den Figuren ist als Beispiel einer Anzeigevorrichtung ein Bildschirm 1 dargestellt, der mittels einer erfindungsgemässen Halterung an einem Basiselement befestigt ist. Letzteres ist im dargestellten Beispiel durch zwei in einem Abstand voneinander angeordnete Säulen 5 gebildet. Die den Bildschirm 1 tragenden Teile der Säulen 5 können vertikal verstellbar sein. Auch können die Säulen 5 horizontal verstellbar sein, beispielsweise um die Betrachtungsdistanz einzustellen. Die vertikale und/oder horizontale Verstellbarkeit ist aber nicht Gegenstand der vorliegenden Erfindung und daher sind entsprechende Bauteile beziehungsweise Antriebe in den Figuren nicht dargestellt. Die erfindungsgemässe Halterung erlaubt es, den Bildschirm 1 zu neigen, wie dies weiter unten noch erläutert wird.

Im dargestellten und beschriebenen Beispiel wird davon ausgegangen, dass die Säulen 5 vertikal angeordnet sind und der Bildschirm 1 durch die Halterung derart mit den Säulen 5 verbunden ist, dass er von einer vertikalen Ausrichtung insbesondere in eine Stellung neigbar ist, in der seine Oberkante weiter von den Säulen 5 entfernt ist als seine Unterkante. Die Erfindung ist aber nicht auf eine solche Ausführung beschränkt. Vielmehr kann beispielsweise das Basiselement selbst geneigt sein und es ist nicht zwingend, dass der Bildschirm 1 eine genau vertikale Ausrichtung einnehmen kann.

Am Bildschirm 1 sind C-Profile 2 in einer vertikalen Ausrichtung angeordnet. Vorzugsweise sind mindestens zwei solche C-Profile 2 vorhanden, im Beispiel sind es vier. Im oberen Bereich der C-Profile 2 und rechtwinklig zu diesen ist ein Winkelprofil 8 mit diesen verbunden. Dies kann in bekannter Weise durch nicht dargestellte Schrauben erfolgen, die in nicht dargestellte Nutensteine greifen, welche in den C-Profilen 2 angeordnet sind. Das Winkelprofil 8 ist vorzugsweise wie dargestellt einstückig über beide Säulen 5 durchlaufend ausgebildet. Es könnten aber auch zwei miteinander fluchtende Winkelprofile 8 verwendet werden, die jeweils im Bereich einer Säule 5 angeordnet und mit je zwei C-Profilen 2 verbunden wären. Im unteren Bereich der C-Profile 2 und rechtwinklig zu diesen ist ein Z-Profil 4 mit diesen verbunden. Die Verbindung des Z-Profils 4 mit den C-Profilen 2 kann gleich erfolgen wie vorangehend für das Winkelprofil 8 beschrieben. Am Winkelprofil 8 sind zwei Verstellwinkel 9 befestigt, an deren freiem Ende jeweils eine Mutter 10 angeschweisst ist. In der Mutter 10 ist eine Spindel 11 eingeschraubt, deren Funktionen weiter unten erläutert werden. Die Verstellwinkel 9 könnten prinzipiell auch direkt an den C-Profilen 2 befestigt sein, jedoch hätte dies den Nachteil, dass der Abstand der betreffenden zwei C-Profile am Bildschirm 1 an den Abstand der Säulen 5 angepasst werden müsste. Dies wäre aber schwierig, weil handelsübliche Bildschirme vorgefertigte, in einem bestimmten Raster angeordnete Befestigungslöcher haben.

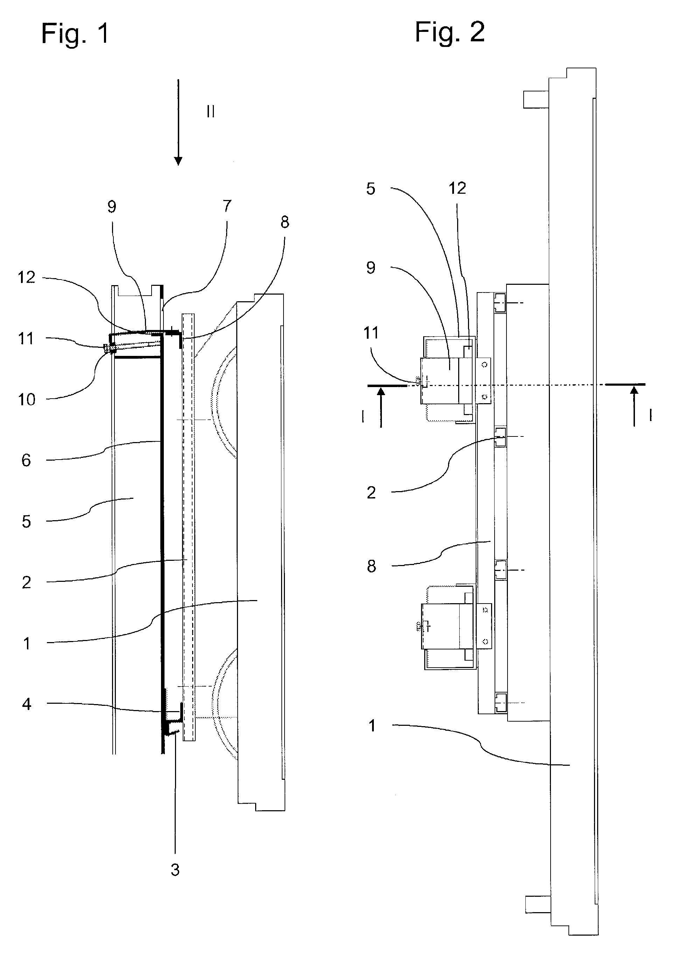

Im unteren Bereich des Bildschirms 1 ist an den Säulen 5 ein horizontal verlaufendes Winkelprofil 3 angeordnet. Grundsätzlich würde es auch genügen, an jeder Säule 5 ein kurzes Stück des Winkelprofils 3 anzuordnen. Wie in Figur 1 zu erkennen ist, schliessen die beiden Schenkel des Winkelprofils 3 vorzugsweise einen Winkel von weniger als 90 Grad ein. Das Winkelprofil 3 trägt den Bildschirm 1, indem sich das oben erwähnte Z-Profil mit seinem freien Schenkel zwischen den Schenkeln des Winkelprofils 3 abstützt. Dadurch wird nicht nur das Gewicht der Bildschirms 1 mitsamt den daran befestigten Teilen der Halterung getragen, sondern die Berührungsachse zwischen dem Winkelprofil 3 und dem Z-Profil 4 dient gleichzeitig als Schwenkachse zum Schwenken des Bildschirms 1.

Oben in jeder Säule 5 ist in der dem Bildschirm 1 zugewandten Vorderwand 6 eine Öffnung 7 angeordnet, durch welche jeweils einer der Verstellwinkel 9 greift. Am unteren Rand der Öffnung 7 ist eine in das Innere der Säule 5 ragende Lasche 12 angeordnet. Diese kann einstückig aus dem Säulenmaterial geformt oder an der Säule 5 befestigt sein.

Beim Zusammenbau werden zuerst die C-Profile 2 am Bildschirm 1 befestigt und dann das Winkelprofil 8 und das Z-Profil 4 mit den C-Profilen 2 verbunden. Am Winkelprofil 8 werden die Verstellwinkel 9 in einem Abstand befestigt, der dem Abstand der Öffnungen 7 entspricht. Die beiden Spindeln 11 werden in die entsprechenden Muttern 10 am Ende der Verstellwinkel 9 eingeschraubt. Unabhängig davon wird an den Säulen 5 das Winkelprofil 3 befestigt. Der so vorbereitete Bildschirm wird nun angehoben und so gegen die Säulen 5 bewegt, dass die Verstellwinkel 9 durch die Öffnungen 7 ragen. Aus dieser Position wird der Bildschirm 1 leicht abgesenkt, bis sich das Z-Profil 4 auf dem Winkelprofil 3 abstützt. Nach dem Loslassen des Bildschirms 1 wird sich dieser auf Grund seiner Schwerpunktslage um die durch die Berührungslinie zwischen dem Z-Profil 4 und dem Winkelprofil 3 gebildete Schwenkachse von den Säulen 5 weg neigen, bis sich die Spindeln 11 innen an der Vorderwand 6 der Säulen 5 abstützen. Dadurch erreicht der Bildschirm 1 eine stabile Position, wobei sein Neigungswinkel durch Drehen der Spindeln 10 verstellt werden kann. Es versteht sich von selbst, dass der erreichbare Verstellbereich durch die Wahl der Länge der Verstellwinkel 9 gewählt werden kann. Die Lasche 12 verhindert zuverlässig, dass die Spindel 11 unbeabsichtigt durch die Öffnung 7 rutscht, wenn der Bildschirm 1 angehoben wird. Zum Trennen der Halterung muss der Bildschirm 1 zuerst in seinem oberen Bereich so weit gegen die Säulen 5 geneigt werden, bis die Enden der Spindeln 11 durch die Laschen 12 frei gegeben werden. Erst jetzt kann der Bildschirm 1 so weit angehoben werden, dass die Spindeln 11 oberhalb der Laschen 12 die Öffnungen 7 verlassen können.

Falls die Säulen 5 kurz sind und im Bereich der Verstellwinkel 9 enden, können natürlich letztere die Säulen 5 oben übergreifen, so dass keine Öffnungen 7 in den Säulen benötigt werden. Die Laschen 12 könnten in einem solchen Fall am Ende der Säulen 5 vorhanden sein.

Anders als in Figur 1 dargestellt kann die Halterung auch so aufgebaut werden, dass das Winkelprofil 3 und das Z-Profil 4 im Bereich des oberen Randes des Bildschirmes 1 an den Säulen 5 angeordnet werden und der Verstellwinkel 9 mit der Spindel 11 im Bereich des unteren Randes. Auch kann bei Bedarf der Bildschirm 1 so geneigt werden, dass sich sein unterer Rand weiter von den Säulen 5 entfernt als sein oberer Rand.

Ein bevorzugtes Einsatzgebiet einer solchen Halterung ist die Befestigung grosser Bildschirme mit einer Diagonale bis zu etwa 2.5 Meter (100 Zoll) und einem Gewicht von etwa 200 Kilogramm. Solche Bildschirme werden beispielsweise in Kontrollräumen, Sicherheitszentralen und Leitstellen verwendet.

### Bezugszeichenliste

- 1: Bildschirm
- 2: C-Profil
- 3: Winkelprofil
- 4: Z-Profil
- 5: Säule
- 6: Vorderwand
- 7: Öffnung
- 8: Winkel
- 9: Verstellwinkel
- 10: Mutter
- 11: Spindel
- 12: Lasche
- 13:
- 14:
- 15:
- 16:
- 17:
- 18:
- 19:
- 20:

## Patentansprüche

1. Halterung für eine Anzeigevorrichtung (1), mit mindestens einem Basiselement (5) und mindestens einem daran befestigten Tragelement (3) sowie mit mindestens einem an der Anzeigevorrichtung (1) zu befestigenden Stützelement (4), wobei das Tragelement (3) und das Stützelement (4) gegeneinander um eine mindestens annähernd horizontal orientierte Schwenkachse schwenkbar sind, **dadurch gekennzeichnet, dass** das Tragelement (3) und das Stützelement (4) als hakenartig zusammenwirkende Profile ausgebildet sind, derart, dass eine Berührungslinie zwischen dem Tragelement (3) und dem Stützelement (4) die Schwenkachse bildet.

2. Halterung nach Anspruch 1, **dadurch gekennzeichnet, dass** das Tragelement (3) ein Winkelprofil mit zwei Schenkeln ist.

3. Halterung nach Anspruch 2, **dadurch gekennzeichnet, dass** der Winkel zwischen den Schenkeln weniger als 90 Grad beträgt.

4. Halterung nach einem der vorangehenden Ansprüche, **dadurch gekennzeichnet, dass** das Stützelement (4) ein Z-Profil ist.

5. Halterung nach einem der Ansprüche 1 bis 3, **dadurch gekennzeichnet, dass** das Stützelement (4) ein nach unten offenes U-Profil ist.

6. Halterung nach einem der vorangehenden Ansprüche, **dadurch gekennzeichnet, dass** vom Stützelement (4) vertikal beabstandet mindestens ein die Schwenklage definierender Verstellwinkel (9) angeordnet ist.

7. Halterung nach Anspruch 6, **dadurch gekennzeichnet, dass** der Verstellwinkel (9) ein mit einer Spindel (11) zusammenwirkendes Innengewinde (10) aufweist.

8. Halterung nach einem der Ansprüche 6 bis 7, **dadurch gekennzeichnet, dass** der Verstellwinkel (9) das Basiselement (5) mindestens teilweise horizontal übergreift.

9. Halterung nach einem der Ansprüche 6 bis 8, **dadurch gekennzeichnet, dass** der Verstellwinkel (9) durch eine im Basiselement (5) angeordnete Öffnung (7) greift.

10. Halterung nach Anspruch 9, **dadurch gekennzeichnet, dass** am unteren Rand der Öffnung (7) eine gegen das freie Ende des Verstellwinkels (9) gerichtete Lasche (12) angeordnet ist.

11. Halterung nach einem der vorangehenden Ansprüche, **dadurch gekennzeichnet, dass** das Stützelement (4) mit mindestens zwei im Wesentlichen vertikal angeordneten, mit der Anzeigevorrichtung (1) zu verbindenden Verbindungsprofilen (2) verbunden ist.

12. Vorrichtung nach Anspruch 11, **dadurch gekennzeichnet, dass** die Verbindungsprofile (2) als C-Profile ausgebildet sind.
